# EUROPÄISCHE PATENTANMELDUNG

(11) **EP 3 428 135 A1**
(43) Veröffentlichungstag der Anmeldung: **16.01.2019**
(21) Anmeldenummer: 17181408.0
(22) Anmeldetag: 14.07.2017
(51) Int. Cl.: C04B 30/00, C04B 30/02, C04B 38/00, C04B 41/00

(54) **WÄRMEDÄMM-MATERIALIEN AUF BASIS HOCHVERDICKENDER KIESELSÄUREN**

(71) Anmelder: Evonik Degussa GmbH, 45128 Essen (DE)
(72) Erfinder: GEISLER, Matthias, 63538 Großkrotzenburg (DE); SEVERIN, Claudia, 65929 Frankfurt (DE); ERZ, Joachim, 79739 Schwörstadt (DE)

(57) **Zusammenfassung**

Hydrophiler pulverförmiger Wärmedämmstoff enthaltend aggregierte Partikel einer hydrophilen Kieselsäure, wobei die hydrophile Kieselsäure eine BET-Oberfläche von 200 - 600 m²/g und eine Verdickung von wenigstens 5000 mPas aufweist.

Damit erhältliche hydrophile und hydrophobe Wärmedämmplatte sowie ein Verfahren zur Herstellung eines hydrophilen und hydrophoben, wärmedämmenden Granulates.

## Beschreibung

Die Erfindung betrifft einen Wärmedämmstoff, eine damit herstellbare Wärmedämmplatte und ein Wärmedämmgranulat, die eine hochverdickende Kieselsäure enthalten.

Mikroporöse Wärmedämmstoffe auf Basis pyrogener Kieselsäuren oder Kieselsäureaerogelen zeichnen sich neben ihrer Nichtbrennbarkeit und ihrer physiologischen Unbedenklichkeit vor allem durch eine hohe Wärmedämmwirkungen im Bereich von minus 200°C bis hin zu 1000°C aus. Mikroporöse Platten auf Basis pyrogener Kieselsäuren oder Aerogelen, Trübungsmittel, armierenden Fasern gelten seit Jahrzehnten als Stand der Technik und werden in zahlreichen Wärmedämmanwendungen erfolgreich eingesetzt.

In EP-A-623567 oder WO98/175596 wird eine Wärmedämmplatte, die eine hochdisperse Kieselsäure enthält, in einem Ofen bei Temperaturen bis zu 1000°C thermisch behandelt und hierdurch gehärtet.

In WO2016/162261 wird ein Verfahren zur Herstellung einer Wärmedämmplatte offenbart, bei dem man eine hydrophile Kieselsäure aufweisende Wärmedämmplatte mit Ammoniak behandelt, indem man die Wärmedämmplatte in eine Kammer einbringt und solange gasförmigen Ammoniak zuführt bis die Druckdifferenz Δp > 20 mbar beträgt. Hierdurch gelingt es die Druckfestigkeiten von Wärmedämmplatten auch nach einer Verpressung zu verbessern.

In WO2011/150987 wird eine Wärmedämm-Pulvermischung mit einer Schüttdichte von 20 - 60 g/l offenbart, die mindestens eine Kieselsäure mit einer BET-Oberfläche von 130 - 1200 m²/g und mit einem D₅₀-Wert von weniger als 60 µm und mindestens ein Fasermaterial mit einem Faserdurchmesser von 1 - 50 µm enthält. Bei der Kieselsäure kann es sich um hydrophile wie hydrophobe Kieselsäuren handeln. Weiterhin wird eine Wärmedämmplatte offenbart, welche aus der Wärmedämm-Pulvermischung erhalten wird. Hierzu werden hydrophile Kieselsäuren und feste, hydrophobe Materialien wie PVDF oder Mischungen von hydrophiler und hydrophober Kieselsäure eingesetzt. Die so erhaltenen Wärmedämmplatten lassen sich aufgrund der, erwünschten, Hydrophobie nicht nachträglich durch Temperaturbehandlung härten, da sie hierdurch ihre hydrophoben Eigenschaften verlieren würden.

Hingegen wird in WO2011/069923 ausgeführt, dass hydrophobe Kieselsäuren sich nicht verpressen lassen. Weiterhin wird ausgeführt, dass eine Nachbehandlung des Dämmstoffes mit Organosilanen nach der Verpressung sehr aufwändig ist, da eine Durchdringung des Kernmaterials nur sehr langsam und mit hohem Druck erfolgen kann. Außerdem wird bei diesem Verfahren die Struktur des Kernmaterials zum Teil zerstört. Daher wird vorgeschlagen, schwerflüchtige, funktionelle Organosilane einzusetzen, die Siedepunkte von mehr als 130°C aufweisen, bevorzugt solche, die sich unzersetzt verdampfen lassen. Ein solches Organosilan wird dann zu einer hydrophilen Kieselsäure gegeben, die Mischung verpresst und nachfolgend thermisch behandelt. Die so erhaltene Platte zeigt jedoch eine ungleichmäßige Hydrophobierung.

Bindemittelfreie, hydrophile Kieselsäure enthaltende Wärmedämmplatten weisen eine verbesserungswürdige mechanische Stabilität der Platten auf. Prinzipiell ist es möglich die Stabilität von hydrophilen Wärmedämmplatten durch thermische Behandlung bei Temperaturen von ca. 600 - 1000°C oder durch eine chemische Behandlung, beispielsweise mit Ammoniak zu erhöhen. In der Regel geht mit einer solchen Behandlung auch ein unerwünschter Anstieg der Wärmeleitfähigkeit einher. Zudem bedeutet eine solche Behandlung, dass ein zusätzlicher Verfahrensschritt notwendig wird.

Für Platten, die eine hydrophobe Kieselsäure enthalten, kommt weder eine thermische noch eine chemische Behandlung in Frage, da die Platten hierdurch ihre hydrophoben Eigenschaften verlieren würden.

Es war daher die technische Aufgabe der vorliegenden Erfindung eine Wärmedämmplatte mit primär verbesserter Wärmeleitfähigkeit bereitzustellen. Zusätzlich sollten die mechanischen Eigenschaften verbessert werden. Die weitere technische Aufgabe bestand darin, ein Verfahren bereitzustellen, welches zu dieser Wärmedämmplatte führt, ohne dass ein nachträglicher Behandlungsschritt notwendig wäre.

Gegenstand der Erfindung ist ein hydrophiler pulverförmiger Wärmedämmstoff enthaltend aggregierte Partikel einer hydrophilen Kieselsäure, wobei die hydrophile Kieselsäure eine BET-Oberfläche von 200 - 600 m²/g und eine Verdickung von wenigstens 5000 mPas aufweist.

Unter einem hydrophilen, pulverförmigen Wärmedämmstoff ist einer zu verstehen, bei dem die Oberfläche der das Pulver bildenden Partikel sich beim Einrühren in Wasser hydrophil verhält, d.h. die Oberfläche von Wasser vollständig benetzt wird und somit gegenüber Wasser einen Kontaktwinkel kleiner als 90° aufweist. Die Bestimmung des Kontaktwinkels ist beispielsweise in EP-A-1433749 beschrieben.

Unter einer hydrophilen Kieselsäure ist im Rahmen dieser Erfindung eine zu verstehen, die an ihrer Oberfläche keine organischen Gruppen, wie beispielsweise Alkylgruppen, trägt, die ihr einen hydrophoben, wasserabweisenden Charakter verleihen würden. Vielmehr sollen die sich an der Oberfläche befindlichen Gruppen weitestgehend oder vollständig aus Si-OH- und Si-O-Si-Gruppen bestehen. Bevorzugt weist der erfindungsgemäße Wärmedämmstoff eine hydrophile Kieselsäure mit einer Silanolgruppendichte SiOH von 1,8 bis 2,5 OH/nm² auf, bestimmt nach der LiAlH₄-Methode von J. Mathias und G. Wannemacher, Journal of Colloid and Interface Science 125 (1988).

Von einer hydrophoben Kieselsäure spricht man dann, wenn die an der Oberfläche sich befindlichen Si-OH- und Si-O-Si-Gruppen wenigstens teilweise mit einer organischen Verbindung umgesetzt werden, die dem Material einen hydrophoben, wasserabweisenden Charakter verleihen.

Bevorzugt enthält der hydrophile, pulverförmige Wärmedämmstoff als hydrophile Kieselsäure eine pyrogene Kieselsäure. Diese weist eine spezielle Struktur auf. Primärteilchen mit einer Größe von 5 - 50 nm verwachsen zu größeren Aggregaten, die sich wiederum zu noch größeren Strukturen, den Agglomeraten, zusammenlagern. Die pyrogene Kieselsäure wird durch Flammenhydrolyse von flüchtigen Siliciumverbindungen wie organischen und anorganischen Chlorsilanen hergestellt. Bei diesem Verfahren wird ein verdampftes, hydrolysierbares Siliciumhalogenid mit einer Flamme zur Reaktion gebracht, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Eine so hergestellte Kieselsäure wird als pyrogene Kieselsäure bezeichnet. Bei diesem Prozess werden zunächst Primärpartikel gebildet, die nahezu frei von inneren Poren sind. Diese Primärteilchen verschmelzen während des Prozesses über sogenannte "Sinterhälse" zu Aggregaten. Aufgrund dieser Struktur ist pyrogen hergestellte Kieselsäure ein idealer Wärmedämmstoff, da die Aggregatstruktur eine hinreichende mechanische Stabilität bewirkt, die Wärmeübertragung durch Festkörperleitfähigkeit über die "Sinterhälse" minimiert und eine ausreichend hohe Porosität erzeugt.

Die BET-Oberfläche der Kieselsäure beträgt 200 - 600 m²/g, bevorzugt 250 - 400 m²/g. Sie kann erhalten werden nach DIN 66131. Dieser Bereich ist am besten bezüglich der Wärmeleitfähigkeit geeignet.

Die Verdickung der in dem erfindungsgemäßen Wärmedämmstoff vorliegenden hydrophilen Kieselsäure beträgt wenigstens 5000 mPas, bevorzugt 5000 - 10000 mPas, besonders bevorzugt 7000 - 9000 mPas. Es hat sich gezeigt, dass dieser Parameter am besten geeignet ist, die hydrophile Kieselsäure zu beschreiben. Innerhalb dieses Bereiches werden die besten Werte für eine spätere Wärmedämmplatte bezüglich Wärmeleitfähigkeit erhalten.
Die Verdickung, in mPas, wird bestimmt in einer Dispersion einer Kieselsäure in einem ungesättigten Polyesterharz. Geeignete ungesättigte Polyesterharze umfassen Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4-Butandiol oder neoPentylglykol ((CH₃)₂C(CH₂OH)₂), oder Polyole, wie Pentaerythrit, bevorzugt gelöst zu 30 bis 80 Gew.-%, bevorzugt 60 bis 70 Gew.-%, in einem olefinischen Reaktivverdünner als Lösemittel, wie zum Beispiel Monostyrol. Die Viskosität des Polyesterharzes beträgt in der Regel 900 -1200 mPas bei einer Temperatur von 22°C.. Geeignet als ungesättigtes Polyesterharz ist beispielsweise Palatal^{®} P6-01 (DSM; Viskosität 23°C: 900 - 1200 mPas).

Hydrophile, aggregierte Kieselsäuren, die eine BET-Oberfläche von 200 - 600 m²/g und eine Verdickung von wenigstens 5000 mPas aufweisen, sind im Stand der Technik bekannt. Diese Kieselsäuren können erhalten werden, wenn man bei der Flammenhydrolyse Siloxane wie Octamethyltrisiloxan, Hexamethylcyclotrisiloxan (D3) oder Octamethylcyclotetrasiloxan (D4) einsetzt.

Es hat sich zudem als vorteilhaft für die mechanischen Eigenschaften und die Wärmeleitfähigkeit einer Wärmedämmplatte gezeigt, wenn die hydrophile, aggregierte Kieselsäure eine möglichst hohe Silanolgruppendichte aufweist. So ist eine hydrophile Kieselsäure bevorzugt, für die 3 ≤ E₃₇₄₅/E₁₈₇₀ ≤ 5 und 3 ≤ E₃₆₆₀/E₁₈₇₀ ≤ 4 gilt, wobei E₃₇₄₅, E₃₆₆₀ und E₁₈₇₀ jeweils der Extinktion der IR-Schwingungsbande bei 3745 cm⁻¹, 3660 cm⁻¹ und 1870 cm⁻¹ entspricht.
Die IR-Spektren werden an Pulverschichten mittels eines Bruker IFS 85 FT-IR-Spektrometers erhalten. Die zu bestimmende Probe wird auf ein NaCl-Monokristallfenster aufgestäubt. Die Messung wird mit folgenden Parametern durchgeführt: Auflösung: 2 cm⁻¹, Messintervall : 4500 cm⁻¹ bis 100 cm⁻¹, Apodizierungsfunktion: triangular, Anzahl der Scans 128. Die Extinktion wird wie folgt ermittelt: Zur Festlegung der Basislinie werden Tangenten an die Basislinie im Bereich zwischen ca. 3800 cm⁻¹ und ca. 2800 cm⁻¹ sowie im Bereich zwischen ca. 2100 cm⁻¹ und 1750 cm⁻¹ angelegt. Vom Maximum der relevanten Banden 3745, 3660 und 1870 cm⁻¹ wird das Lot auf die Basislinie gefällt und die jeweiligen Höhen vom Maximum zur Basislinie in mm ausgemessen. Es wird davon ausgegangen, dass der Schwingungsbande bei 3660 cm⁻¹ eine verbrückte SiOH-Schwingung und der Schwingungsbande bei 3745 cm⁻¹ eine frei SiOH-Schwingung zugrunde liegt. Die Extinktion dieser Banden wird normiert, indem durch die Extinktion der Bande der SiO-Kombinations-Schwingung bei 1870 cm⁻¹ dividiert wird.

Weiterhin soll der erfindungsgemäße hydrophile, pulverförmige Wärmedämmstoff eine Stampfdichte von 30 - 70 g/l aufweisen.

Der hydrophile, pulverförmige Wärmedämmstoff enthält bevorzugt neben einer Kieselsäure auch wenigstens ein IR-Trübungsmittel. Dieses wird bevorzugt aus der Gruppe bestehend aus Titanoxiden, Zirkonoxiden, Ilmeniten, Eisentitanaten, Eisenoxiden, Zirkonsilikaten, Siliciumcarbid, Manganoxiden, Graphit, Ruße, oder um Stoffgemische, welche mindestens einen der vorgenannten Bestandteile umfassen. Besonders bevorzugt handelt es sich um Siliciumcarbid, Titanoxid, Eisenoxid oder Ruß. Die Partikelgröße der Trübungsmittel liegt in der Regel zwischen 0,1 bis 25 µm. Bei Siliciumcarbid und Titanoxiden ist der mittlere Partikeldurchmesser d₅₀ bevorzugt 1 bis 10 µm, besonders bevorzugt 2 bis 8 µm.
Der Anteil an IR-Trübungsmittel, bezogen auf den hydrophilen, pulverförmigen Wärmedämmstoff, beträgt bevorzugt 5 bis 30 Gew.-%. Der Anteil an hydrophiler Kieselsäure beträgt bevorzugt 70 bis 95 Gew.-%, bezogen auf den hydrophilen, pulverförmigen Wärmedämmstoff.

Zur mechanischen Verstärkung können dem hydrophilen, pulverförmigen Wärmedämmstoff Fasern zugesetzt werden. Diese Fasern können anorganischen oder organischen Ursprungs sein und betragen in der Regel 2 bis 10 Gew.-%, bezogen auf die Summe von Kieselsäuren und Trübungsmitteln. Beispiele einsetzbarer anorganischer Fasern sind Glaswolle, Steinwolle, Basalt-Fasern, Schlacken-Wolle und keramische Fasern, die aus Schmelzen von Aluminiumoxid und/oder Siliciumdioxid, sowie weiteren anorganischen Metalloxiden bestehen. Reine Siliciumdioxidfasern sind beispielsweise Silica-Fasern. Beispiele einsetzbarer organischer Fasern sind Cellulosefasern, Textilfasern oder Kunststofffasern. Der Durchmesser der Fasern beträgt bevorzugt 1 bis 30 µm, besonders bevorzugt 5 bis 15 µm, ganz besonders bevorzugt 6 bis 9 µm, und die Länge beträgt bevorzugt 1 bis 25 mm, besonders bevorzugt 3 bis 12 mm.

Weiterhin kann der hydrophile Wärmedämmstoff anorganische Zusatzstoffe enthalten. Zum Einsatz kommen können Lichtbogenkieselsäuren, SiO₂-haltige Flugstäube, die durch Oxidationen von flüchtigem Siliciummonoxid, die bei der elektrochemischen Herstellung von Silicium oder Ferrosilicium entstehen. Ferner können natürlich vorkommende SiO₂-haltige Verbindungen wie Diatomeenerden und Kieselguren zum Einsatz kommen.

Ebenfalls können thermisch aufgeblähte Mineralien wie Perlite und Vermiculite, feinteilige Metalloxide wie Aluminiumoxid, Titandioxid, Eisenoxid zugesetzt werden. Der Anteil der anorganischen Zusatzstoffe kann bis zu 25 Gew.-%, bezogen auf den hydrophilen Wärmedämmstoff betragen. Bevorzugt ist der Wärmedämmstoff weitestgehend frei von diesen anorganischen Zusatzstoffen.

Zur Herstellung des erfindungsgemäßen hydrophilen, pulverförmigen Wärmedämmstoffes können die Bestandteile des Wärmedämmstoffes beispielsweise mittels Planetenmischer, Zyklonmischer, Dissolver, Fluidmischer, Feinprallmühlen, Luftwirbelmühlen oder Mahlsichter vermischt werden.

Ein weiterer Gegenstand der Erfindung ist eine hydrophile Wärmedämmplatte, die durch Verpressen des hydrophilen, pulverförmigen Wärmedämmstoffes erhältlich ist. Zur Herstellung der hydrophilen Wärmedämmplatte kann der hydrophile Wärmedämmstoff und die anorganischen Fasern nach bekannten Verfahren entweder batchweise oder kontinuierlich verpresst werden. In der WO2005/028195 ist die kontinuierliche Herstellung hydrophiler Wärmedämmplatten mittels einer Bandpresse vorgesehen. Eine thermische oder chemische Nachbehandlung der hydrophilen Wärmedämmplatte zur Verbesserung ihrer mechanischen Eigenschaften ist möglich, aufgrund des erfindungsgemäßen, eingesetzten Wärmedämmstoffes nicht erforderlich.

Ein weiterer Gegenstand der Erfindung ist ein Verfahren zur Herstellung einer hydrophoben Wärmedämmplatte bei dem man den erfindungsgemäßen hydrophilen, pulverförmigen Wärmedämmstoff zu einer hydrophilen Wärmedämmplatte verpresst und nachfolgend mit einem Hydrophobierungsmittel zur Reaktion bringt. Als Hydrophobierungsmittel sind Organosilane ausgewählt aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H₅, -OC₃H₈, Y= NH, O bevorzugt.

Das zur Reaktionbringen erfolgt bevorzugt, indem man
a) die hydrophile Platte in eine Kammer einbringt und ein oder mehrere unter den Reaktionsbedingungen dampfförmige Hydrophobierungsmittel, bevorzugt Organosilane, solange der Kammer zuführt, bis die Druckdifferenz Δp ≥ 20 mbar beträgt, wobei Δp = p2 - p1, wobei p1 = Druck in der Kammer vor Einbringen des Hydrophobierungsmittels, wobei p1 kleiner als Atmosphärendruck ist und p2 = Druck in der Kammer bei der das Einbringen des Organosilanes gestoppt, ist,
b) die Temperatur in der Kammer 20 bis 300°C ist und man
c) vom Zeitpunkt an, an dem das Organosilan zugegeben wird, die Platte noch 1 Minute bis 1 Stunde in der Kammer belässt.

Ein weiterer Gegenstand der Erfindung ist eine hydrophile Wärmedämmplatte mit einer Dichte von 130 - 200 g/l, enthaltend 70 - 95 Gew.-% aggregierte Partikel einer hydrophilen Kieselsäure mit einer BET-Oberfläche von 300 - 400 m2/g und einer Verdickung von wenigstens 5000 mPas, 4 - 30 Gew.-%, IR-Trübungsmittel, 1 -10 Gew.-% Fasern und 0 - 25 Gew.-% feinteilige Zusatzstoffe. Sie weist eine Wärmeleitfähigkeit WLF bei Normaldruck von von 20 < WLF ≤ 18 mW/(m • K) und eine Biegefestigkeit von wenigstens 40 kPa, bevorzugt 50 - 75 kPa.

Ihr Halbwertsdruck, definiert als der Gasdruck, bei dem die Gaswärmeleitfähigkeit zur Hälfte ausgeprägt ist, d.h. ca. 13 mW/(m • K), beträgt mehr als 800 hPa, bevorzugt 830 - 880 hPa. In der Literatur wird bei mikroporösen Stoffen ein Halbwertsdruck von 600-800 mbar ermittelt. Die erfindungsgemäße hydrophile Wärmedämmplatte liegt deutlich über diesem Wert.

Ein weiterer Gegenstand der Erfindung ist eine hydrophobe Wärmedämmplatte mit einer Dichte von 150 - 200 g/l, enthaltend 70 - 95 Gew.-% aggregierte Partikel einer hydrophoben Kieselsäure mit einer BET-Oberfläche von 300 - 400 m²/g und 3 - 8 Gew.-% Kohlenstoff bezogen auf die hydrophobe Kieselsäure, 4 - 30 Gew.-%, IR-Trübungsmittel, 1 -10 Gew.-% Fasern und
0 - 25 Gew.-% feinteilige Zusatzstoffe.
Sie weist eine Wärmeleitfähigkeit WLF bei Normaldruck von 16 < WLF ≤ 18,5 mW/(m · K) und eine Biegefestigkeit von wenigstens 50 kPa, bevorzugt 60 - 80 kPa auf.

Ein weiterer Gegenstand der Erfindung ist ein Verfahren zur Herstellung eines hydrophilen, wärmedämmenden Granulates durch Verdichten, in der Regel durch Kompaktierung, des erfindungsgegemäßen, hydrophilen, pulverförmigen Wärmedämmstoffes. Das nach dem Verdichten erhaltene Granulat kann in einem Behandlungsschritt, nämlich durch thermische Behandlung bei einer Temperatur von 200 - 1200°C oder durch Behandlung mit gasförmigem Ammoniak, gehärtet werden. Das hydrophile, wärmedämmende Granulat mit oder ohne Behandlungsschritt mit einem Hydrophobierungsmittel unter Bildung eines hydrophoben, wärmedämmenden Granulates zur Reaktion gebracht werden. Als Hydrophobierungsmittel sind Organosilane ausgewählt aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H₅, -OC₃H₈, Y= NH, O bevorzugt.

### Beispiele

### Analytische Methoden

### Hydrophile Kieselsäure

Verdickung: 7,5 g hydrophiler Kieselsäure und 142,5 g ungesättigtes Polyesterharz Palatal^{®} P6-01 (DSM; Viskosität 23°C: 900 - 1200 mPas) werden mittels des Dissolvers Dispermat AE02-C1, VMA-Getzmann (Durchmesser Dissolverscheibe 50 mm) über einen Zeitraum von 5 Minuten bei 3000 min⁻¹ dispergiert.

60 g dieser Dispersion werden mit weiteren 63 g Palatal^{®} P6-01 und 27 g einer Lösung aus Monostyrol und Paraffin mit einem Erstarrungspunkt von 46-48°C, Gewichtsverhältnis Monostyrol/Paraffin = 100/0,4, versetzt und über einen Zeitraum von 3 Minuten bei 1500 min⁻¹ dispergiert.

Die erhaltene Dispersion weist einen Gehalt an hydrophiler Kieselsäure von 2,0 Gew.-% auf. Luftblasen werden durch Zentrifugieren entfernt. Die Dispersion wird auf 22°C temperiert und deren Viskosität mittels Physica-Rheolab MC1, Anton Paar, bestimmt.

### Wärmedämm-Mischung:

Stampfdichte nach ISO 787-11:1995

### Wärmedämmplatten

Wärmeleitfähigkeit nach DIN EN 12667:2001 bei einer Mitteltemperatur von 10°C und einem Anpressdruck von 250 Pa.

Dichte nach DIN EN 1602:2013

Biegefestigkeit nach DIN EN 12089:2013. Hierbei wird die Biegefestigkeit nach Prüfverfahren B an ca. 20 mm dicken Platten bestimmt.

### Hydrophile Wärmedämmplatte:

Halbwertsdruck, definiert als der Gasdruck, bei dem die Gaswärmeleitfähigkeit zur Hälfte ausgeprägt ist, gemäß R. Caps et al., Vacuum 82 (2008) 691-699.

### Hydrophobe Wärmedämmplatte

Wärmedämmstoffe für das Bauwesen - Bestimmung der Wasseraufnahme bei langzeitigem Eintauchen; Deutsche Fassung EN 12087:2013

Die langzeitige Wasseraufnahme bei teilweisem Eintauchen wird durch die Messung der Gewichtsänderung eines Probekörpers bestimmt, dessen Unterseite für einen Zeitraum von 28 Tagen in Wasser eingetaucht wird. Prüfverfahren 1A (Abtropfen).

### Hydrophile Kieselsäure

Die Herstellung der hydrophilen Kieselsäuren erfolgt in Anlehnung an EP-A-38900 Beispiel 1: In einem Verdampferwerden 1,5 kg/h Octamethylcyclotetrasiloxan verdampft, mit 14,5 Nm³/h Luft (Primärluft) vermischt. Das Siloxan/Luftgemisch wird sodann in einen Brenner eingeführt und dort mit 0,80 Nm³/h Wasserstoff (Kern-Wasserstoff) vermischt und gezündet. Zusätzlich werden weitere 15 Nm³/h Luft (Sekundärluft) zugeführt. Zur Stabilisierung der Flamme wird zusätzlich durch einen die Brennermündung umgebenden Ringspalt 0,35 Nm³/h Wasserstoff (Mantel-Wasserstoff) eingebracht.

Die BET-Oberfläche der erhaltenen hydrophilen Kieselsäure beträgt 312 m²/g. Die Verdickung beträgt 5220 mPas.

Die Beispiele 2-4 werden entsprechend Beispiel 1 hergestellt. Die Einsatzstoffe, sind in Tabelle 1 wiedergegeben.

Beispiel 5 (Vergleichsbeispiel): entsprechend EP-A-1686093, Beispiel 1.

Die BET-Oberfläche, Verdickung und Extinktionen der hydrophilen Kieselsäuren sind in Tabelle 2 wiedergegeben.

### Hydrophiler pulverförmiger Wärmedämmstoff

Die hydrophilen Kieselsäuren der Beispiele 1 - 5 werden mit Siliciumcarbid, SiC 1000, Keyvest und Glasfasern, PSF 611/2,2, Asglawo in einem Batch-Mischer, Amixon, im Gewichtsverhältnis 82:15:3 vermischt.

Die Stampfdichten des hydrophilen pulverförmigen Wärmedämmstoffes sind in Tabelle 3 wiedergegeben.

### Hydrophile Wärmedämmplatte

Der hydrophile pulverförmige Wärmedämmstoff wird mittels eines Preßwerkzeuges zu einer hydrophilen Platte mit den Dimensionen 20 mm x 330 mm x 330 mm verpresst.

Die Presskraft beim Verpressen des hydrophilen, pulverförmigen Wärmedämmstoffes ist in Tabelle 3, die Dichte der hydrophilen Platten ist in Tabelle 4 wiedergegeben.

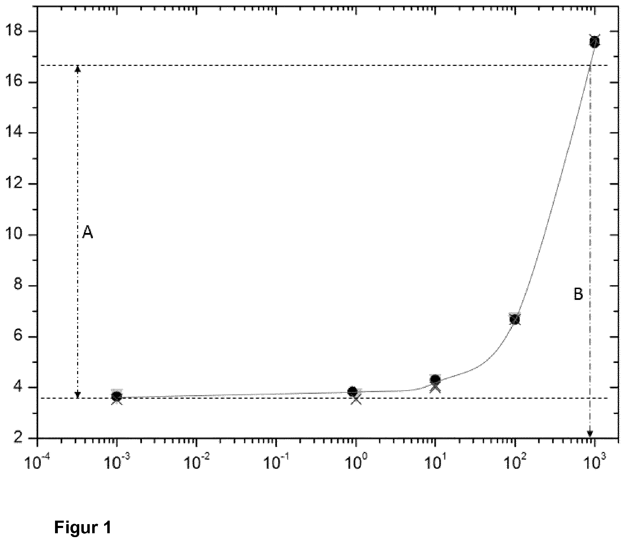

Figur 1 zeigt den Verlauf der Wärmeleitfähigkeit (y-Achse; in 10⁻³ Wm⁻¹K⁻¹) der erfindungsgemäßen hydrophilen Wärmedämmplatten der Beispiele 1 - 3 in Abhängigkeit vom Druck (x-Achse; in hPa). A= halbe Gaswärmeleitung = 13 mW/(m*K); B = Halbwertsdruck = 850 mbar.

### Hydrophobe Wärmedämmplatte

Nachfolgend wird die hydrophile Platte in eine Kammer eingebracht und auf 165°C geheizt. Währenddessen wird in einem abgetrennten Kessel Hexamethyldisilazan (HMDS) verdampft. Die Kammer wird auf einen Unterdruck evakuiert und anschließend das verdampfte HMDS in die Kammer geleitet. Nach einer Reaktionszeit von einer Stunde kann eine hydrophobe Platte entnommen werden. Die Massenzunahme der hydrophilen Wärmedämmplatte bei der Hydrophobierung ist in Tabelle 3 wiedergegeben.

Die Dichte der hydrophoben Wärmedämmplatte sowie die Wärmeleitfähigkeit und die Biegefestigkeit der hydrophilen und der hydrophoben Wärmedämmplatten sind in Tabelle 4 wiedergegeben. Die hydrophoben Wärmedämmplatten weisen nach EN 12087:2013 eine sehr geringe flächenbezogene Wasseraufnahme im Bereich 0,01 kg/m² auf.

**Tabelle 1: Herstellung der eingesetzten hydrophilen Kieselsäuren**

| | **Si-Quelle** | | **Kern-Wasserstoff** | **Mantel-Wasserstoff** | **Primärluft** | **Sekundärluft** |
|---|---|---|---|---|---|---|
| **Beispiel** | | kg/h | Nm³/h | Nm³/h | Nm³/h | Nm³/h |
| 1 | D4 | 1,5 | 0,80 | 0,35 | 14,5 | 15 |
| 2 | D4 | 1,5 | 1,42 | 0,35 | 16,6 | 15 |
| 3 | D4 | 12,5 | 6,25 | 2 | 130 | 55 |
| 4 | D4 | 8,5 | 13,2 | 2 | 132 | 55 |
| 5 (Vgl.) | SiCl₄ | 180 | 58 | - | 190 | 60 |

**Tabelle 2: Physikalisch-chemische Eigenschaften der eingesetzten Kieselsäuren**

| **Beispiel** | **BET_{KS phil}** | **η_{KS phil}** | **E₃₇₄₅/E₁₈₇₀** | **E₃₆₆₀/E₁₈₇₀** |
|---|---|---|---|---|
| | m²/g | mPas | | |
| 1 | 312 | 5220 | 4,0 | 3,5 |
| 2 | 343 | 7275 | 4,2 | 3,6 |
| 3 | 341 | 7800 | 4,2 | 3,7 |
| 4 | 385 | 8300 | 4,7 | 3,8 |
| 5 (Vgl.) | 298 | 3900 | 2,7 | 2,8 |

| | | | | |
|---|---|---|---|---|
| BET_{KS phil} = BET-Oberfläche der eingesetzten hydrophilen Kieselsäure; η_{KS phil} = Verdickung der eingesetzten hydrophilen Kieselsäure | | | | |

**Tabelle 3: Einsatzstoffe, Reaktionsbedingungen hydrophile Wärmedämmplatten**

| | **ρ_{Stampf}** | **F_{Press}** | **Δm_{hydrophob}** |
|---|---|---|---|
| **Beispiel** | g/l | kN | % |
| 1 | 34 | 33 | 6,2 |
| 2 | 32 | 35 | 6,6 |
| 3 | 44 | 36 | 5,0 |
| 4 | 42 | 40 | 5,9 |
| 5 (Vgl.) | 35 | 31 | 4,7 |

| | | | |
|---|---|---|---|
| ρ_{Stampf} = Stampfdichte des hydrophilen, pulverförmigen Wärmedämmstoffes; F_{Press} = Presskraft beim Verpressen des hydrophilen, pulverförmigen Wärmedämmstoffes; Δm_{hydrophob} = Massenzunahme der hydrophilen Wärmedämmplatte bei der Hydrophobierung | | | |

**Tabelle 4: Eigenschaften der hydrophilen und hydrophoben Wärmedämmplatten**

| | **Hydrophile Wärmedämmplatte** | | | **Hydrophobe Wärmedämmplatte** | | |
|---|---|---|---|---|---|---|
| **Beispiel** | **ρₚₕᵢₗ** | **WLFₚₕᵢₗ** | **BGFₚₕᵢₗ** | **ρ_{phob}** | **WLF_{phob}** | **BGF_{phob}** |
| | g/L | mW/(m*K) | kPa | g/L | mW/(m*K) | kPa |
| 1 | 167 | 19,4 | 43 | 178 | 17,9 | 50 |
| 2 | 160 | 18,7 | 60 | 171 | 17,0 | 65 |
| 3 | 161 | 18,9 | 55 | 169 | 16,9 | 58 |
| 4 | 157 | 18,7 | 62 | 167 | 16,8 | 70 |
| 5 (Vgl.) | 160 | 20,7 | 32 | 168 | 19,8 | 34 |

| | | | | | | |
|---|---|---|---|---|---|---|
| ρ = Dichte; WLF = Wärmeleitfähigkeit bei Normaldruck; BGF = Biegefestigkeit | | | | | | |

## Patentansprüche

1. Hydrophiler, pulverförmiger Wärmedämmstoff enthaltend aggregierte Partikel einer hydrophilen Kieselsäure, **dadurch gekennzeichnet, dass** die hydrophile Kieselsäure eine BET-Oberfläche von 200 - 600 m²/g und eine Verdickung von wenigstens 5000 mPas aufweist.

2. Hydrophiler, pulverförmiger Wärmedämmstoff nach Anspruch 1,
**dadurch gekennzeichnet, dass** die hydrophile Kieselsäure eine pyrogene Kieselsäure ist.

3. Hydrophiler, pulverförmiger Wärmedämmstoff nach den Ansprüchen 1 oder 2,
**dadurch gekennzeichnet, dass** für die hydrophile Kieselsäure 3 ≤E₃₇₄₅/E₁₈₇₀ ≤ 5 und 3 ≤ E₃₆₆₀/E₁₈₇₀ ≤ 4 gilt, wobei E₃₇₄₅, E₃₆₆₀ und E₁₈₇₀ jeweils der Extinktion der IR-Schwingungsbande bei 3745 cm⁻¹, 3660 cm⁻¹ und 1870 cm⁻¹ entspricht.

4. Hydrophiler, pulverförmiger Wärmedämmstoff nach den Ansprüchen 1 bis 3,
**dadurch gekennzeichnet, dass** er eine Stampfdichte von 20 - 70 g/l aufweist.

5. Hydrophiler, pulverförmiger Wärmedämmstoff nach den Ansprüchen 1 bis 4,
**dadurch gekennzeichnet, dass** er ein IR-Trübungsmittel umfasst.

6. Hydrophile Wärmedämmplatte erhältlich durch Verpressen des hydrophilen, pulverförmigen Wärmedämmstoffes gemäß der Ansprüche 1 bis 5.

7. Hydrophobe Wärmedämmplatte erhältlich durch Verpressen des hydrophilen, pulverförmigen Wärmedämmstoffes gemäß der Ansprüche 1 bis 5 zu einer hydrophilen Wärmedämmplatte und nachfolgendes zur Reaktion bringen mit einem Hydrophobierungsmittel.

8. Verfahren zur Herstellung der hydrophoben Wärmedämmplatte nach Anspruch 7, **dadurch gekennzeichnet, dass**
a) man die hydrophile Platte gemäß Anspruch 6 in eine Kammer einbringt und als Hydrophobierungsmittel solange ein oder mehrere, unter den Reaktionsbedingungen dampfförmige Organosilane der Kammer zuführt, bis die Druckdifferenz Δp ≥ 20 mbar beträgt, wobei Δp = p2 - p1, wobei p1 = Druck in der Kammer vor Einbringen des Organosilanes, wobei p1 kleiner als Atmosphärendruck ist und p2 = Druck in der Kammer bei der das Einbringen des Organosilanes gestoppt, ist,
b) die Temperatur in der Kammer 20 bis 300°C ist und man
c) vom Zeitpunkt an, an dem das Organosilan zugegeben wird, die Platte noch 1 Minute bis 1 Stunde in der Kammer belässt.

9. Hydrophile Wärmedämmplatte mit einer Dichte von 130 - 200 g/l, enthaltend 70 - 95 Gew.-% aggregierte Partikel einer hydrophilen Kieselsäure mit einer BET-Oberfläche von 300 - 400 m²/g und einer Verdickung von wenigstens 5000 mPas, 4 - 30 Gew.-%, IR-Trübungsmittel, 1 -10 Gew.-% Fasern und 0 - 25 Gew.-% feinteilige Zusatzstoffe.

10. Hydrophobe Wärmedämmplatte mit einer Dichte von 150 - 200 g/l, enthaltend 70 - 95 Gew.-% aggregierte Partikel einer hydrophoben Kieselsäure mit einer BET-Oberfläche von 300 - 400 m²/g und 3 - 8 Gew.-% Kohlenstoff bezogen auf die hydrophobe Kieselsäure, 4 - 30 Gew.-%, IR-Trübungsmittel, 1 -10 Gew.-% Fasern und 0 - 25 Gew.-% feinteilige Zusatzstoffe.

11. Verfahren zur Herstellung eines hydrophilen, wärmedämmenden Granulates durch Verdichten des hydrophilen, pulverförmigen Wärmedämmstoffes gemäß der Ansprüche 1 bis 5.

12. Verfahren zur Herstellung eines hydrophoben, wärmedämmenden Granulates durch Verdichten des hydrophilen, pulverförmigen Wärmedämmstoffes gemäß der Ansprüche 1 bis 5 und nachfolgendes zur Reaktionbringen des hydrophilen, wärmedämmenden Granulates mit einem Hydrophobierungsmittel.
